# EUROPEAN PATENT APPLICATION

(11) **EP 3 133 673 A1**
(43) Date of publication of application: **22.02.2017**
(21) Application number: 14889305.0
(22) Date of filing: 18.04.2014
(51) Int. Cl.: H01M 2/26, H01M 2/22, H01M 10/04

(54) **RECTANGULAR SECONDARY BATTERY**

(71) Applicant: Hitachi Automotive Systems, Ltd., Hitachinaka-shi, Ibaraki 312-8503 (JP)
(72) Inventor: IWASA Masaaki, Hitachinaka-shi Ibaraki 312-8503 (JP); HIRANO Fujio, Hitachinaka-shi Ibaraki 312-8503 (JP)
(74) Representative: MERH-IP Matias Erny Reichl Hoffmann Patentanwälte PartG mbB
(86) International application number: PCT/JP2014/061077
(87) International publication number: WO 2015/159433

(57) **Abstract**

The purpose of the present invention is to provide a rectangular secondary battery with higher capacity.

The rectangular secondary battery (100) includes: a flat wound electrode group (3) having a foil lamination part where foil exposure parts (34b), (32b) are laminated on both sides in the winding axis direction; a battery case (1) where a plurality of wound electrode groups (3) are accommodated in parallel; current collector boards (200), (210) joined to the foil lamination part inside the battery case (1) ; and external terminals (14), (12) connected to the current collector boards (200), (210) and exposed outside of the battery case (1). At least two of the wound electrode groups (3) have joined side lamination parts (34b-1), (32b-1) and non-joined side lamination parts (34b-2), (32b-2) made by splitting the foil lamination part into two in the thickness direction. The joined side lamination parts (34b-1), (32b-1) are being bundled and are joined to the current collector boards (200), (210).

## Description

### Technical Field

The present invention relates to a rectangular secondary battery used for vehicles, for example.

### Background Art

PTL 1 describes a structure of a secondary battery accommodating multiple wound electrode groups in a single battery container and arranged with a flat-plated current collector board between each multiple wound electrode group (see PTL 1).

### Citation List

### Patent Literature

PTL 1: JP 2013-134994 A

### Summary of Invention

### Technical Problem

However, in the conventional technology described in PTL 1, the current collector board is arranged between the wound electrode groups. This requires a space for the collector board, and reduces the battery capacity. As a result, there is a problem that high-capacity battery cannot be realized.

The present invention is made in view of the above mentioned problem, and the purpose is to provide a rectangular secondary battery with high capacity.

### Solution to Problem

In order to solve the problem mentioned above, the configuration described in the claim is employed for example. The present invention includes several means for solving the above mentioned problems. One of the examples is : a rectangular secondary battery including: a flat wound electrode group having a foil lamination part where a foil exposure part is laminated on both sides of winding axis direction; a battery case accommodating therein a plurality of the wound electrode groups in parallel; a current collector board joined to the foil lamination part inside the battery case; and an external terminal connected to the current collector board and is exposed outside the battery case, wherein at least two of the wound electrode groups have a joined side lamination part and a non-joined side lamination part made by splitting the foil lamination part into two in the thickness direction, and the joined side lamination parts are being bundled and are joined to the current collector board.

### Advantageous Effects of Invention

The present invention can provide a rectangular secondary battery with high capacity. Problems, configurations, and advantages other than those described above will be apparent from the description of the following embodiments.

### Brief Description of Drawings

[FIG. 1] FIG. 1 is a perspective diagram of appearance of a rectangular secondary battery.
[FIG. 2] FIG. 2 is an exploded perspective diagram of the rectangular secondary battery.
[FIG. 3] FIG. 3 is an exploded perspective diagram illustrating a state where a portion of a wound electrode group is unfolded.
[FIG. 4] FIG. 4 is a sectional view illustrating a wound electrode group and a current collector board along the A-A line in FIG. 1 according to the first embodiment.
[FIG. 5] FIG. 5 is a diagram illustrating an arrangement relation of the wound electrode group and the current collector board according to the first embodiment.
[FIG. 6] FIG. 6 is a diagram illustrating a state where the current collector board is joined to the wound electrode group.
[FIG. 7] FIG. 7 is a perspective diagram illustrating the current collector board according to the first embodiment.
[FIG. 8] FIG. 8 is a diagram illustrating a state where foil exposure parts, which are not joined to the current collector board, are being bundled.
[FIG. 9] FIG. 9 is a sectional view illustrating a wound electrode group and a current collector board along the A-A line in FIG. 1 according to the second embodiment.
[FIG. 10] FIG. 10 is a diagram illustrating the arrangement relation of the wound electrode group and the current collector board according to the second embodiment.
[FIG. 11] FIG. 11 is a perspective diagram illustrating the current collector board according to the second embodiment.
[FIG. 12] FIG. 12 is a diagram illustrating the arrangement relation of a wound electrode group and a current collector board according to the third embodiment.
[FIG. 13] FIG. 13 is a sectional view illustrating a wound electrode group and a current collector board along the A-A line in FIG. 1 according to the fourth embodiment.
[FIG. 14] FIG. 14 is a perspective diagram illustrating the current collector board according to the fourth embodiment.
[FIG. 15] FIG. 15 is a diagram illustrating the arrangement relation of a wound electrode group and a current collector board according to the fifth embodiment.
[FIG. 16] FIG. 16 is a perspective diagram illustrating the current collector board according to the fifth embodiment.
[FIG. 17] FIG. 17 is a diagram illustrating the arrangement relation of a wound electrode group and a current collector board according to the sixth embodiment.
[FIG. 18] FIG. 18 is a perspective diagram illustrating the current collector board according to the sixth embodiment.
[FIG. 19] FIG. 19 is a diagram illustrating an arrangement of two wound electrode groups.
[FIG. 20] FIG. 20 is a diagram illustrating schematically a state where two wound electrode groups are combined.

### Description of Embodiments

The embodiments of the rectangular secondary battery according to the present invention will be discussed with reference to drawings.

### First Embodiment

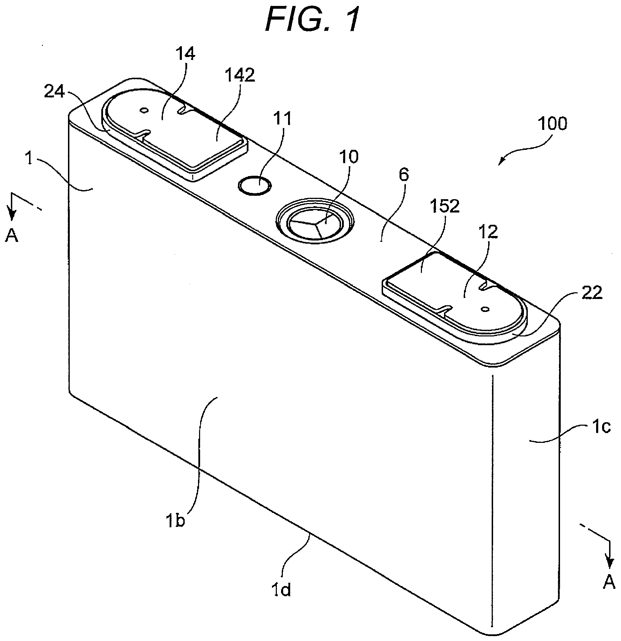

FIG. 1 is a perspective diagram of an appearance of a rectangular secondary battery according to the first embodiment. As illustrated in FIG. 1, a rectangular secondary battery 100 has a battery container consisting of a battery case 1 and a battery lid 6. The substances of the battery case 1 and the battery lid 6 are aluminum or aluminum alloy. The battery case 1 is made by deep drawing, and is formed in a flat rectangular box shape having an opening in one side. The battery case 1 includes: a rectangular flat-plated bottom surface 1d; a pair of broader side surfaces 1b that is provided in each of a pair of long sides of the bottom surface 1d; and a pair of narrower side surfaces 1c that is provided in each of a pair of short sides of the bottom surface 1d.

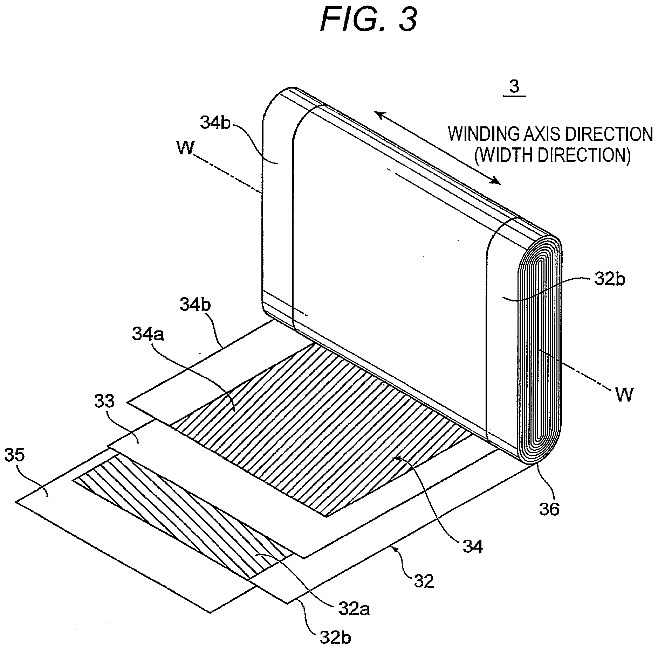

The battery lid 6 is rectangular flat-plated, and is laser welded so as to cover the opening of the battery case 1. In other words, the battery lid 6 seals the opening of the battery case 1. An anode external terminal 14 and a cathode external terminal 12, which are electrically connected with an anode electrode 34 and a cathode electrode 32 (see FIG. 3) of the wound electrode group 3, are arranged in the battery lid 6. An anode side external insulator 24 is arranged between the anode external terminal 14 and the battery lid 6. A cathode side external insulator 22 is arranged between the cathode external terminal 12 and the battery lid 6. Each of the external insulators 24, 22 are for preventing short circuit.

A flat-plated bus bar welding part 142 is provided in the anode external terminal 14. A flat-plated bus bar welding part 152 is provided in the cathode external terminal 12. When an assembled battery is produced, bus bars are welded by contacting the bus bars to the bus bar welding parts 142, 152. Thus, the anode external terminal 14 is connected to a bus bar, and the cathode external terminal 12 is connected to a bus bar.

The battery lid 6 is provided with a gas exhausting valve 10. The gas exhausting valve 10 is formed by thinning partially the battery lid 6 using press processing. Instead, a thin film can be attached to the opening of the battery lid 6 by laser welding. This thinning portion can be regarded as the gas exhausting valve. When a gas is generated by heat generation due to an abnormality of the rectangular secondary battery 100, such as over charge, the pressure inside the battery container increases. The gas exhausting valve 10 cleavages when the pressure inside the battery container increases to reach a predetermined pressure. Thus, the gas is exhausted from the inside and the pressure inside the battery container is reduced.

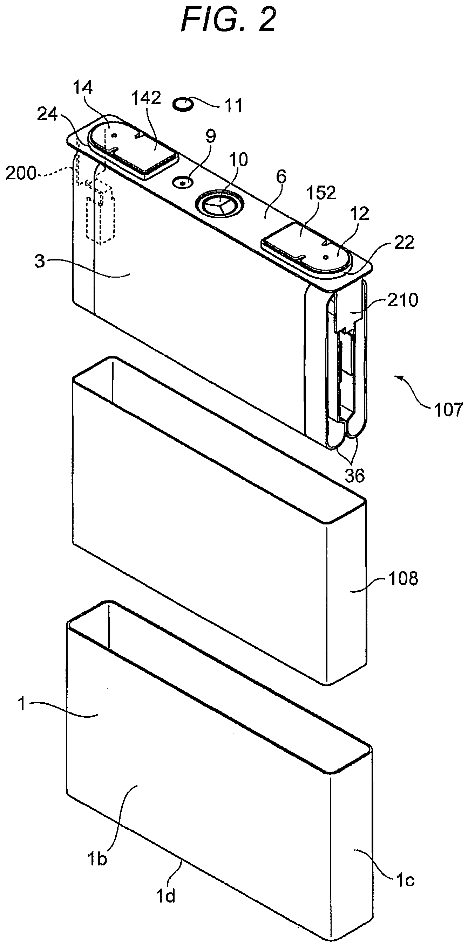

As illustrated in FIG. 2, the battery case 1 accommodates the wound electrode group 3 (see FIG. 3). The wound electrode group 3 is held by a lid assemble body 107, and is accommodated such that the bent side 36 is in the bottom side of the case. The battery case 1 accommodates: an anode current collector board 200 which is joined to the anode electrode 34 (see FIG. 3) of the wound electrode group 3; a cathode current collector board 210 which is joined to the cathode electrode 32 (see FIG. 3) of the wound electrode group 3; and the wound electrode group 3. The current collector boards 200, 210 and the wound electrode group 3 are covered with an insulation case 108. The substance of the insulation case 108 is a resin having an insulation characteristics such as polypropylene. The battery case 1 and the wound electrode group 3 are insulated electrically. Here, the lid assemble body 107 is made by integrally assembling: the wound electrode group 3; the anode current collector board 200; the anode external terminal 14; the cathode current collector board 210; the cathode external terminal 12; and the battery lid 6.

The anode external terminal 14 is electrically connected to the anode electrode 34 (see FIG. 3) of the wound electrode group 3 via the anode current collector board 200. The cathode external terminal 12 is electrically connected to the cathode electrode 32 (see FIG. 3) of the wound electrode group 3 via the cathode current collector board 210. Thus, the electric power is supplied to an external apparatus via the anode external terminal 14 and the cathode external terminal 12. Conversely, an externally generated electric power is supplied and charged to the wound electrode group 3 via the anode external terminal 14 and the cathode external terminal 12.

As illustrated in FIG. 2, the battery lid 6 is drilled with an electrolyte injection hole 9 for injecting an electrolysis solution into the battery container. The electrolyte injection hole 9 is sealed by a sealing plug 11 after the electrolysis solution is injected. The electrolysis solution can be, for example, non-aqueous electrolysis solution where lithium salt, such as lithium hexafluorophosphate (LiPF₆), is dissolved in organic solvent of carbonic ester group, such as ethylene carbonate.

Referring to FIG. 3, the wound electrode group 3 will be discussed. FIG. 3 is a perspective diagram illustrating the wound electrode group 3, and illustrates a state where the winding end side of the wound electrode group 3 is unfolded. The wound electrode group 3, which is a power generation element, has a laminating structure, such that a belt-like anode electrode 34 and cathode electrode 32 are wound flatly around a winding center axis W intervening separators 33, 35 in between.

The anode electrode 34 has an anode medical compound layer 34a that is formed by coating an anode active material medical compound on the both surfaces of the anode foil, which is an anode current collector board. On the one end side of the anode foil in the width direction, provided is an anode foil exposure part 34b that is not coated with the anode active material medical compound. The cathode electrode 32 has a cathode medical compound layer 32a formed by coating a cathode active material medical compound on the both surfaces of the cathode foil, which is a cathode current collector board. On the other end side of the cathode foil in the width direction, provided is a cathode foil exposure part 32b that is not coated with the cathode active material medical compound. The anode foil exposure part 34b and the cathode foil exposure part 32b are domains where metal surface of electrode foil is exposed, and are wound such that the exposure parts are arranged separately in the one end side and the other end side positions in the winding center axis W direction (the width direction of FIG. 3).

Regarding the cathode electrode 32, 10 weight parts of polyvinylidene difluoride (will be referred to as "PVDF") which is a binding material, is added to 100 weight parts of amorphous carbon powder which is a cathode active material. Then N-methylpyrrolidone (will be referred to as "NMP") is added, as a distributed solvent, and are mixed together to produce the cathode medical compound. The cathode medical compound is coated on both sides of 10 µm thickness copper foil (cathode foil) leaving a welding portion (cathode foil exposure part 32b). Thereafter, drying process, press process, and cutting process are executed to obtain a cathode electrode 32 having a cathode active material coating part of 70 µm thickness which does not include the copper foil.

In the present embodiment, a cathode active material using amorphous carbon is exemplified. However, it shall not be limited to this, and can be : a natural graphite that can insert and disconnect lithium ion; various manmade graphite; carbon materials such as coke; chemical compounds including Si or Sn (for example, SiO, TiSi₂); and a composite material thereof. Geometry of their particle can be flaky, globular, fiber, or massive; and is not limited specifically.

Regarding the anode electrode 34, 10 weight parts of flaky graphite, as an electric conduction material, and 10 weight parts of PVDF as a binding material, are added to 100 weight parts of lithium manganate (chemical formula: LiMn₂O₄) which is an anode active material. Then NMP is added as a distributed solvent, and are mixed together to produce the anode medical compound. The anode medical compound is coated on both sides of 20 µm thickness aluminum foil (anode foil) leaving a welding portion (anode foil exposure part 34b). Thereafter, drying process, press process, and cutting process are executed to obtain an anode electrode 34 having an anode active material coating part of 90 µm thickness which does not include the aluminum foil.

In the present embodiment, an anode active material using lithium manganate is exemplified. However, followings can be used: other lithium manganate having a spinel crystal structure; lithium manganese compound oxide where a portion thereof is replaced or doped with a metallic element; cobalt acid lithium or titan acid lithium having layered crystal structures; and lithium metal compound oxide where a portion thereof is replaced or doped with a metallic element.

In the present embodiment, the anode electrode 34 and the cathode electrode 32 using PVDF, as a binding material of medical compound layers, are exemplified. However, polymers such as polytetrafluoroethylene (PTFE), polyethylene, polystyrene, polybutadiene, butyl rubber, nitrile rubber, styrene-butadiene rubber, polysulfide rubber, nitrocellulose, cyanoethyl cellulose, various kinds of latex, acrylonitrile, fluoride vinyl, fluoride vinylidene, fluoride propylene, fluoride chloroprene, and acrylics resin, or compounds thereof can be used.

Regarding the both end parts of the wound electrode group 3 in the width direction, or in the winding center axis W direction that is perpendicular to the winding direction, one end is a foil lamination part of the anode electrode 34, and the other end is a foil lamination part of the cathode electrode 32. The foil lamination part of the anode electrode 34 provided in the one end is made of laminated anode foil exposure parts 34b which are not formed with the anode medical compound layer 34a. The foil lamination part of the cathode electrode 32 provided in other end is made of laminated cathode foil exposure parts 32b which are not formed with the cathode medical compound layer 32a. The foil lamination part of the anode foil exposure part 34b and the foil lamination part of the cathode foil exposure part 32b are being pressed and bundled respectively in the thickness direction beforehand, and are connected respectively to the anode current collector board 200 and the cathode current collector board 210 of the lid assemble body 107 using ultrasonic junction, to form an electrode group assembly body.

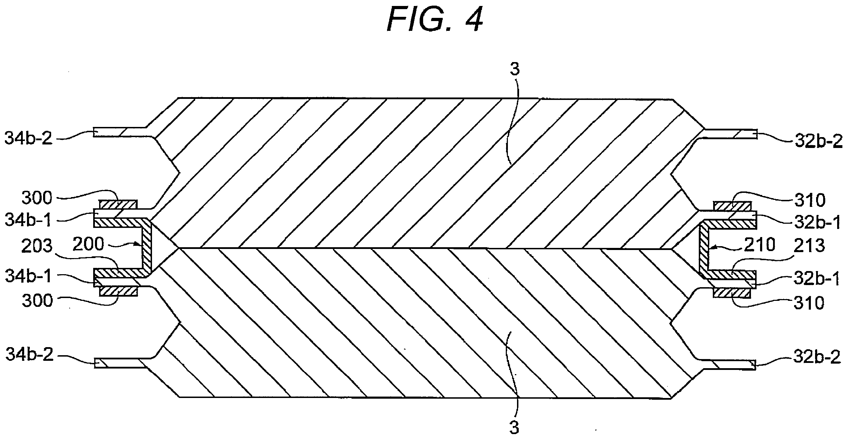

The present embodiment will be detailed with reference to FIG. 4 through FIG. 7.

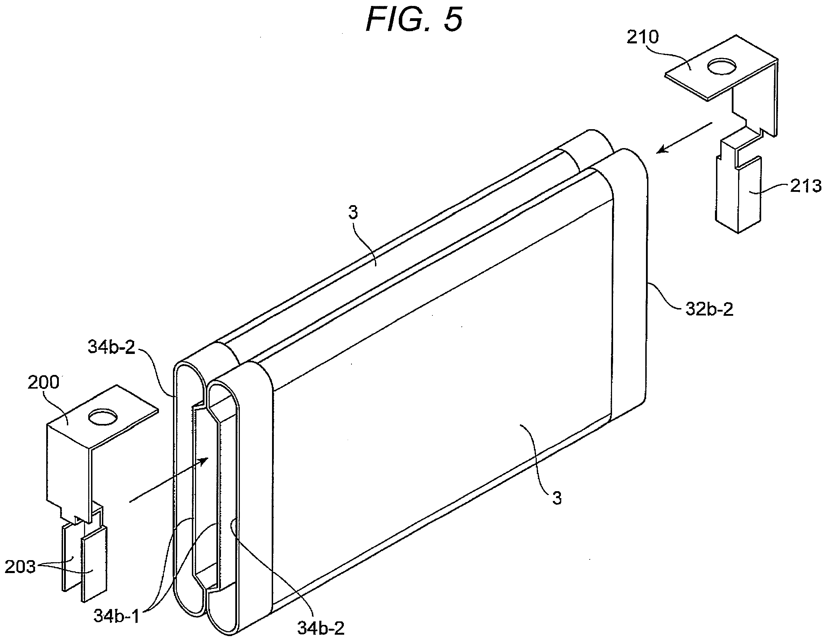

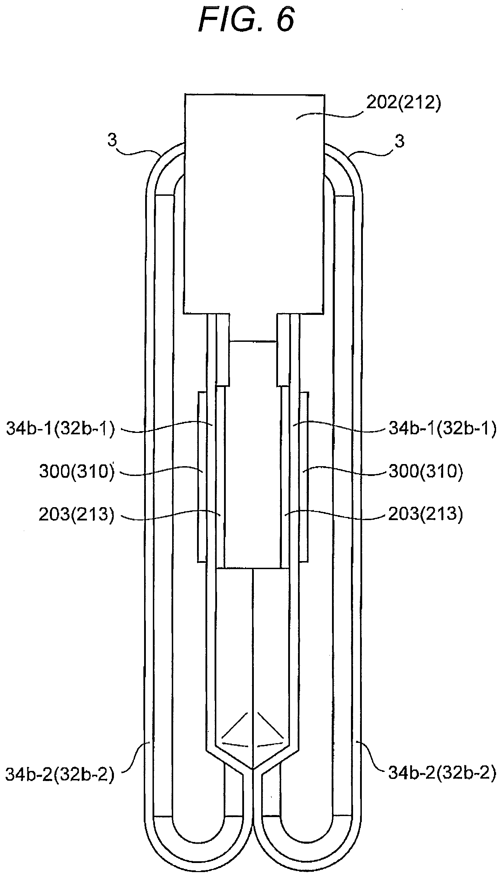

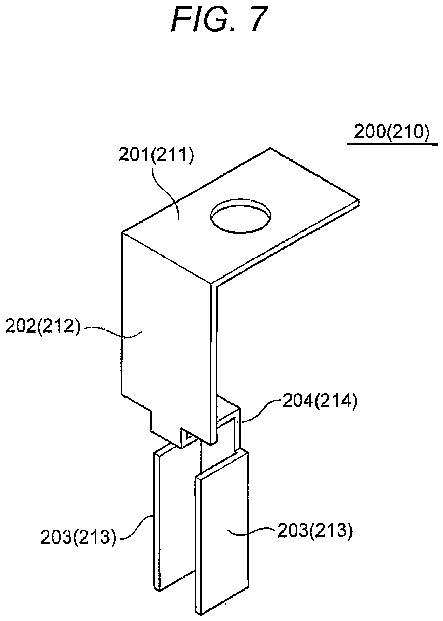

FIG. 4 is a diagram illustrating the wound group and current collector board in the A-A section of FIG. 1. FIG. 5 is a diagram illustrating the spatial relation of the foil exposure part of the wound electrode group and the current collector board joined to the foil exposure part. FIG. 6 is a diagram illustrating the relation of two wound electrode groups and the anode current collector board arranged between two wound electrode groups. FIG. 7 is a perspective diagram of the anode current collector board.

The wound electrode groups 3 are accommodated in one battery container in unit of two. Two wound electrode groups 3 are arranged such that the outermost layer separators face each other. In other words, multiple wound electrode groups 3 are connected in parallel, being arranged in piles parallel to each other in the thickness direction such that their flat surfaces face each other and their electrodes face each other. The foil lamination part of the anode foil exposure part 34b of each wound electrode group 3 is split into two, in the thickness direction, which are: a joined side lamination part 34b-1 to which the anode current collector board 200 is joined; and a non-joined side lamination part 34b-2 to which the anode current collector board 200 is not joined. Similarly, the foil lamination part of the cathode foil exposure part 32b is also split into two, in the thickness direction, which are: a joined side lamination part 32b-1 to which the cathode current collector board 210 is joined; and a non-joined side lamination part 34b-2 to which the cathode current collector board 210 is not joined. This splitting is made centering the separator of the winding start of the wound electrode group 3. In other words, the foil lamination part of the anode foil exposure part 34b and the foil lamination part of the cathode foil exposure part 32b are split into two from the central position in the thickness direction to the direction away from each other in the thickness direction.

These two wound electrode groups 3 are arranged in piles such that each of their joined side lamination parts 34b-1, 32b-1 is arranged in pair, in positions approaching each other in the thickness direction, and each of their non-joined side lamination parts 34b-2, 32b-2 is arranged in pair, in positions away from each other in the thickness direction.

The joined side lamination parts 34b-1 of the anode foil exposure parts 34b are being compressed in the thickness direction and are being bundled for connecting to the anode current collector board 200. The joined side lamination parts 32b-1 of the cathode foil exposure parts 32b are being compressed in the thickness direction and are being bundled for connecting to the cathode current collector board 210.

The widths of the anode foil exposure part 34b and the cathode foil exposure part 32b are set so as to face a joint part 203 of the anode current collector board 200 and a joint part 213 of the cathode current collector board 210 respectively when they are piled in the thickness direction, and the necessary widths can be decreased according to a decrease in the thicknesses. When the joined side lamination parts 34b-1 are being bundled, the distance in the thickness direction is half compared to a case when all of the foil lamination parts of the anode foil exposure part 34b are being bundled. Therefore, rather than bundling the entire foil lamination part of the anode foil exposure part 34b into one, the necessary width for the anode foil exposure part 34b can be made smaller by bundling the joined side lamination parts 34b-1 which is the half thickness. Similarly, rather than bundling the entire foil lamination part of the cathode foil exposure part 32b into one, the necessary width for the cathode foil exposure part 32b can be made smaller by bundling the joined side lamination parts 32b-1 which is the half thickness. Therefore, the area of the anode active material layer in the anode electrode and the area of the cathode active material layer in the cathode electrode can be made larger correspondingly, and thus it is possible to attain high capacity of a battery.

As illustrated in FIG. 7, the anode current collector board 200 includes: a bearing surface part 201 arranged in parallel with the battery lid 6; a flat part 202 parallel to the short side surface 1c of the battery case 1; a joint part 203 which is joined to the joined side lamination part 34b-1 of the anode foil exposure part of the wound electrode group 3; and a bending part 204 which connects the joint part 203 and the flat part 202. Similarly, the cathode current collector board will be discussed with reference to FIG. 7 since the configuration is similar to that of the anode current collector board. The cathode current collector board 210 includes: a bearing surface part 211 arranged in parallel with the battery lid 6; a flat part 212 parallel to the short side surface 1c of the battery case 1; a joint part 213 which is joined to the joined side lamination part 32b-1 of the cathode foil exposure part 32b of the wound electrode group 3 ; and a bending part 214 which connects the joint part 213 and the flat part 212. The anode current collector board 200 and the cathode current collector board 210 can be produced from a board using bending processing.

The joint part 203 of the anode current collector board 200 is arranged between the jointed side lamination parts 34b-1, 34b-1, which are paired by two wound electrode groups 3, and are connected to the joined side lamination parts 34b-1, 34b-1. The joint part 213 of the cathode current collector board 210 is arranged between the jointed side lamination parts 32b-1, 32b-1, which are paired by two wound electrode groups 3, and are connected to the joined side lamination parts 32b-1, 32b-1.

As illustrated in FIG. 4, two wound electrode groups 3 are arranged in parallel. The anode foil exposure part 34b of each wound electrode group 3 is unfolded respectively toward the thickness direction of the wound electrode group from the separator of the winding start of the wound electrode group 3, and is split into the joined side lamination part 34b-1 and the non-joined side lamination part 34b-2.

Then the joint part 203 of the anode current collector board is arranged between the joined side lamination parts 34b-1, 34b-1 of the anode foil exposure part of two wound electrode groups 3. The joint part 203 of the anode current collector board 200 is arranged so as to face the joined side lamination part 34b-1 of the anode foil exposure part 34b and the foil exposure part surface which is positioned in the outermost circumference of the wound electrode group 3. The joined side lamination part 34b-1 and the joint part 203 of the anode current collector board 200 are joined using an ultrasonic welding method, for example.

Thus, the joined side lamination part 34b-1 of the anode foil exposure part 34b and the joint part 203 of the anode current collector board 200 are joined. Similarly, the joined side lamination part 32b-1 of the cathode foil exposure part 32b and the joint part 213 of the cathode current collector board 210 are joined. Besides the ultrasonic welding, resistance welding method or laser welding method can be used as a method for connecting the foil exposure part and the current collector board.

The foil exposure parts 34b-1 34b-2, 32b-1, and 32b-2 of the wound electrode group 3 are not coated with electrode active material and are laminated with metallic foil only. Therefore, thickness is thinner compared to the portion coated with active material. The joint part 203 of the anode current collector board 200 is arranged so as to contact the metallic foil of the foil exposure part surface from the thickness direction of the wound electrode group 3. Therefore, even when the anode current collector board 203 is joined to the joined side lamination part 34b-1 of the anode foil exposure part 34b, total thickness of the metallic foil on the joined side lamination part 34b-1 of the anode foil exposure part 34b and the joint part 203 of the anode current collector board 200 is not thicker than the thickness of the central portion of the wound electrode group 3 on which the active material layer is laminated. In other words, the total thickness is not thicker than the maximum thickness of the wound electrode group 3. It is same to the cathode side. Therefore, the anode current collector board 200 is arranged between the joined side lamination parts 34b-1, 34b-1 of the foil exposure part 34b. The cathode current collector board 210 is arranged between the joined side lamination parts 32b-1, 32b-1 of the foil exposure part 32b. This avoids space unnecessary for the anode current collector board 200 and the cathode current collector board 210, and high capacity of the battery can thereby be attained.

Intervening the joined side lamination part 34b-1 (32b-1) of the anode (cathode) foil exposure part, a ribbon 300 (310), which is a thin metal plate, can be arranged on the metallic foil surface of the joined side lamination part 34b-1 (32b-1) on the opposite side of the joint part 203 (213) of the anode (cathode) current collector board. The arrangement of the ribbon 300 (310) allows sandwiching the joined side lamination part 34b-1 (32b-1) of the anode (cathode) foil exposure part between the ribbon 300 (310) and the joint part 203 (213) of the anode (cathode) current collector board, and prevents the metallic foil from being damaged with a vibration given to the metallic foil of the foil exposure part when an ultrasonic welding method is performed.

Thus, two wound electrode groups 3 are accommodated in one battery container 1, the anode (cathode) foil exposure part of each wound electrode group 3 is split into two in the thickness direction, and the joint part 203 (213) of the current collector board 200 (210) is arranged between the countering foil exposure parts of each split wound electrode group 3. The current collector board 200 (210) can thereby be joined from the thickness direction of the wound electrode group 3. Thus, the current collector board 200 (210) is connected to only one side of the foil exposure part 34b (32b) of the wound electrode group 3 which is split into two in the thickness direction, that is, to the joined side lamination part 34b-1 (32b-1). This simplifies the structure of the current collector board 200 (210), and affords a structure suitable for mass production.

According to the above configuration, the anode (cathode) foil exposure part of each wound electrode group 3 is being bundled only in the portion countering the joint part 203 (213) of the anode (cathode) current collector board 200 (210) among the joined side lamination part 34b-1 (32b-1). The other portion of the joined side lamination part 34b-1 (32b-1), non-joined side lamination part 34b-2 (32b-2), and the bent part, are not being bundled. These parts are unfolded toward the outside of the winding axis W direction.

Thus, the anode (cathode) foil exposure part 34b (32b) of each wound electrode group 3 has a larger unfolded portion, which is unfolded toward the outside of the winding axis W direction, compared to the bundled portion. This eases infiltration of an electrolysis solution into the wound electrode group 3 from the unfolded portion and the electrolysis solution can be sufficiently infiltrated into the wound electrode group 3. For example, insufficient supply of the electrolysis solution into the active material layer can be prevented during usage.

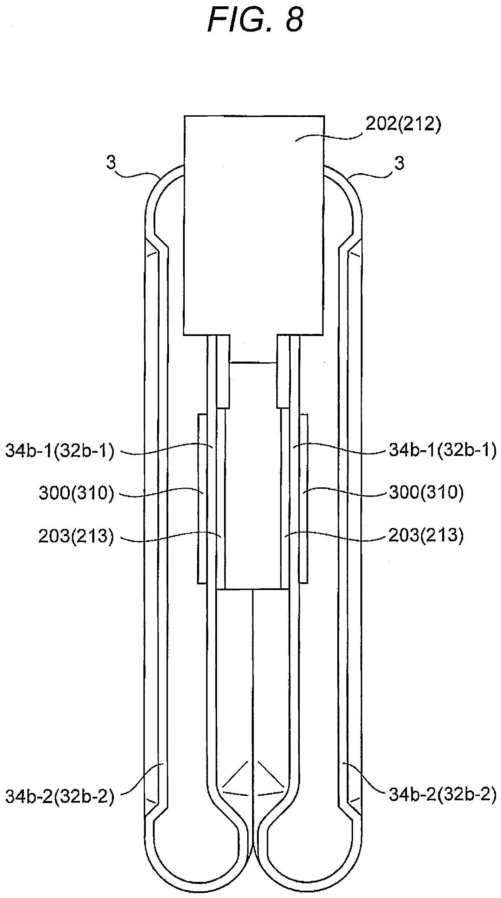

FIG. 8 is a diagram illustrating a state where the non-joined side lamination parts 34b-2, 32b-2 of the foil exposure parts of each wound electrode groups 3, not joined to the current collector board, are being compressed in the thickness direction and being bundled.

The non-joined side lamination part 34b-2 (32b-2) of the anode (cathode) foil exposure parts 34b (32b) can be compressed in the thickness direction and being bundled similarly to the joined side lamination part 34b-1 (32b-1). For example, the metallic foils of the foil exposure parts can be integrated by ultrasonic welding from the surface side of the metallic foils. When the non-joined side lamination parts 34b-2, 32b-2 are being compressed in the thickness direction and are integrated, it becomes convenient to handle. Further, intrusions of metal obstacles into the wound electrode groups 3 from a clearance between the metallic foils can be reduced. This reduces possibility of short circuit inside the wound electrode group 3.

An integrated area, where the non-joined side lamination parts 34b-2 (32b-2) is being compressed in the thickness direction, is satisfactory as long as the non-joined side lamination parts 34b-2 (32b-2) do not scatter. Thus, the integrated area can be smaller than contacting area where the joined side lamination parts 34b-1 (32b-1) is contacted to the joint part 203 (213) of the current collector board.

Therefore, the anode (cathode) foil exposure part of each wound electrode group 3 has a larger unfolded portion, which is unfolded toward the outside of the winding axis W direction, compared to the bundled portion. This eases infiltration of an electrolysis solution into the wound electrode group 3 from the unfolded portion and the electrolysis solution can be sufficiently infiltrated into the wound electrode group 3. For example, insufficient supply of the electrolysis solution into the active material layer can be prevented during usage.

Next, the arrangement of two wound electrode groups 3 will be discussed.

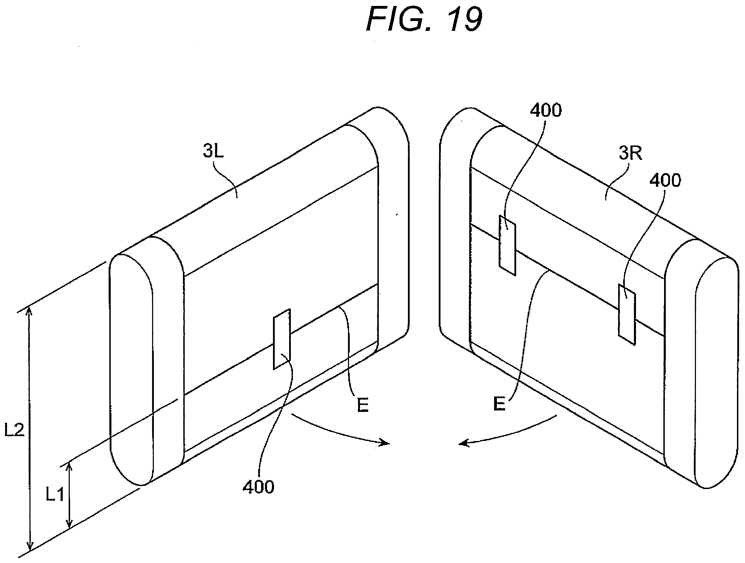

FIG. 19 is a diagram illustrating an arrangement of two wound electrode groups. As mentioned above, the wound electrode group 3, which is a power generation element, is configured by winding the belt-like anode electrode 34 and cathode electrode 32 flatly around the winding center axis W intervening the separators 33, 35 in between, and has a laminated structure. The outermost layers of the wound electrode group 3 are the separators 33, 35.

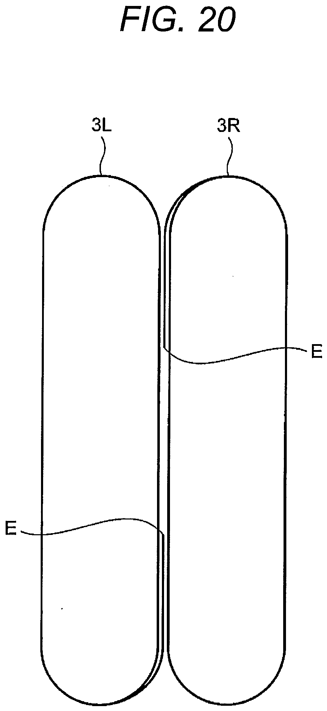

As illustrated in FIG. 20, two neighboring wound electrode groups 3 are arranged so that the winding directions are same to each other. In the present embodiment, the wound electrode groups 3 are wound in a counterclockwise direction. The winding end parts E of the separators 33, 35 are arranged respectively in the flat sides facing each other. Two wound electrode groups 3 are arranged in positions such that the winding end parts E of the separators 33, 35 are separated with a predetermined interval.

As illustrated in FIG. 19, in the present embodiment, a distance L1 from the bent side of the wound electrode group 3 to the winding end of the separators 33, 35 is adjusted to the half of or less than a height L2 of the wound electrode group 3. The wound electrode group 3 is formed thicker only in a length L1 portion of the separator in the outermost layer. When the wound electrode group 3 is wound, the wound separators 33, 35 are fixed with sticky tapes 400.

Two wound electrode groups 3R, 3L, thus wound, are arranged so as to face each other as illustrated in FIG. 19. In the wound electrode group 3L in the one side, the winding end part E of the separators 33, 35 is arranged in the lower portion of the wound electrode group 3L so as to project upward from the lower side bent portion, as illustrated in FIG. 19 and FIG. 20. On the contrary, in the wound electrode group 3R in the other side, the winding end part E of the separators 33, 35 is arranged in the upper portion of the wound electrode group 3R so as to project downward from the upper side bent portion.

The wound electrode groups 3R, 3L are arranged in parallel facing each other, so that the winding end parts E of the separators 33, 35 of the wound electrode groups 3R, 3L face each other. In this case, the sticky tape 400 of the wound electrode group 3L in the one side is located in the central portion of the wound electrode group 3L in the width direction. Its upper end is located below the winding end part E of the other wound electrode group 3R. On the contrary, in the wound electrode group 3R in the other side, sticky tapes 400 are arranged in positions where the wound electrode group 3R is split into three, one each in these two positions, in order to fix the winding end part of the separators 33, 35. The lower end of the sticky tape 400 of the wound electrode group 3R is located above the winding end part E of the wound electrode group 3L.

Thus, when two wound electrode groups 3R, 3L are arranged such that the sticky tapes 400 face each other, the winding end parts E of the separators 33, 35 are arranged in positions away from each other with a predetermined interval. Therefore, the winding end parts E of two separators 33, 35 and the sticky tapes 400 of two wound electrode groups 3R, 3L, respectively, can be prevented from being overlapped each other, and thus, it is possible to prevent the thickness from being ununiformed locally.

The wound electrode group 3 expands when it is charged. Therefore, the thickness of the wound electrode group may become locally ununiformed when two wound electrode groups 3R, 3L are arranged facing each other. In such case, the surface pressure of this portion increases and the degradation of an electrode may proceed.

In the present embodiment, sticking position of the sticky tape 400 is adjusted such that, in one wound electrode group 3 the tape is positioned in the central position of the wound electrode group 3 in the width direction, and in the other wound electrode group 3 the tape is positioned in two places when splitting the wound electrode group 3 into three in the width direction. Therefore, the sticky tapes 400 of the wound electrode groups 3 do not overlap each other when two wound electrode groups 3R, 3L are arranged facing each other. This prevents thickness from being locally ununiformed. The sticky tape does not have to be arranged in this way. It can be arranged as long as the sticky tapes 400 do not overlap when two wound electrode groups are piled.

According to the present embodiment; in two wound electrode groups 3R, 3L, one of the two foil lamination parts of the anode foil exposure part 34b is the joined side lamination part 34b-1, and the other is the non-joined side lamination part 34b-2. Similarly, one of the two foil lamination parts of the cathode foil exposure part 32b is the joined side lamination part 32b-1, and the other is the non-joined side lamination part 32b-2. Therefore, each of the non-joined side lamination part 34b-2 , 32b-2 does not have to be connected with the anode current collector board 200 or the cathode current collector board 210. This allows downsizing the anode current collector board 200 and the cathode current collector board 210, and can lightweight the entire rectangular secondary battery 100.

Conventionally, aqueous batteries such as lead battery, nickel-cadmium battery, and nickel-metal hydride battery were in the mainstream in the field of secondary battery. However, due to the downsizing and lightweight of electronic apparatuses, a lithium secondary battery has attracted attention for its high energy density. Therefore, research, development, and commercialization have proceeded rapidly. Meanwhile, an electric vehicle (EV) and a hybrid electric vehicle (HEV) which assists a part of driving with an electric motor have been developed in each automobile manufacturing company in view of global warming and fuel drainage. A secondary battery having high capacity and high output has been required as their power supply. To meet such requirement, a non-aqueous lithium secondary battery having high voltage has attracted attention as a power supply. Particularly, the rectangular lithium secondary battery has excellent volume efficiency when the battery is packed. Therefore, development of the rectangular lithium secondary battery is increasingly demanded for HEVs or EVs.

However, for use for HEVs or EVs, a battery with high capacity per unit volume is being required. To satisfy such demand, it is necessary to increase the percentage of the active material in the wound electrode body occupied in the battery container. For this purpose, it is necessary to reduce the volume of the foil exposure part exposed with the metallic foil uncoated with the active material for connecting the current collector boards which are in the both ends of the wound electrode group.

The wound electrode group is made by flatly winding a metallic foil coated with an active material, and then a current collector board is joined to the metallic foils laminated on the both ends of this wound electrode group using an ultrasonic welding method, for example. When the number of the metallic foil sheets is increased, it is difficult to join the foil with the current collector board using the ultrasonic welding method. Therefore, the number of the laminating metallic foil sheets needs to be reduced for reducing the volume of the foil exposure part.

In the present invention, the number of the wound electrode groups 3 accommodated in one battery container is set to multiple. The foil exposure parts of the wound electrode group 3, arranged at least in both sides, are split in the thickness direction into the joined side lamination part and the non-joined side lamination part. This allows reducing the number of laminated sheets of the joined side lamination part and can narrow the width of the foil exposure part. Therefore, areas of the anode active material layer and the cathode active material can be enlarged and thus, it is possible to attain a high capacity battery.

### Second Embodiment

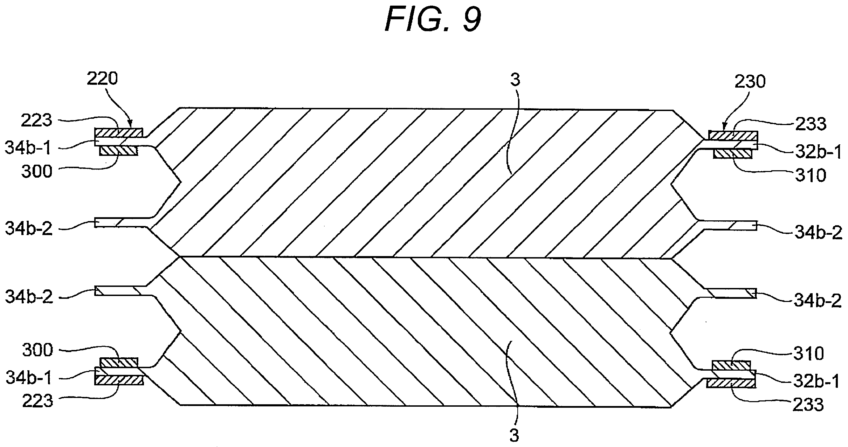

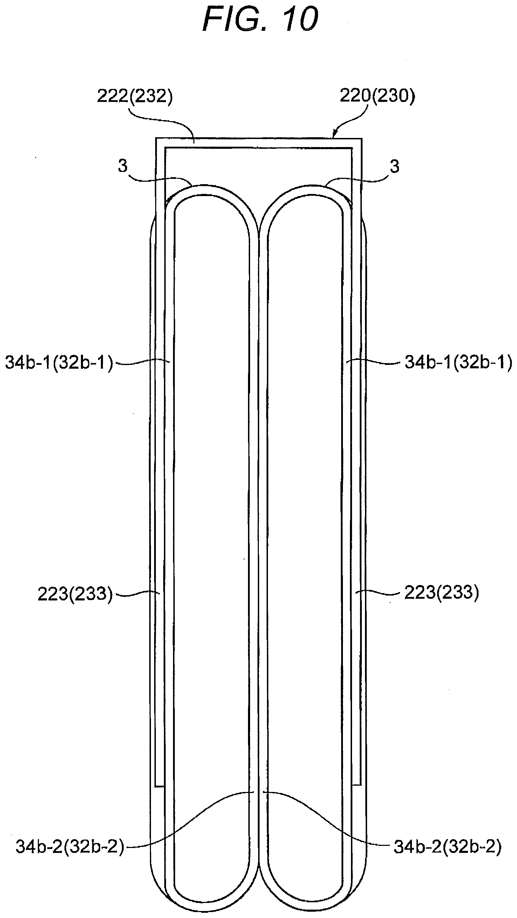

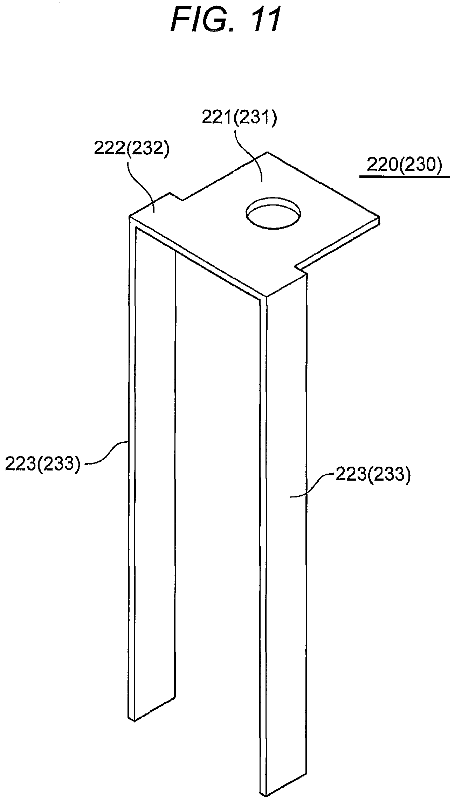

The second embodiment of the present invention will be discussed with reference to FIG. 9 through FIG. 11. FIG. 9 is a diagram illustrating a winding group and a current collector board in the A-A section of FIG. 1 according to the second embodiment. FIG. 10 is a diagram illustrating the relation of two wound electrode groups and an anode current collector board. FIG. 11 is a perspective diagram of the anode current collector board.

The feature specific to the present embodiment is that, the joined side lamination part of the foil exposure part, which is made by splitting the wound electrode group into two, and which the flat part of the current collector board is joined to, is a foil exposure part closer to the long side surface of the battery case of each wound electrode group. That is, in the first embodiment, there are two foil lamination parts made of splitting the foil exposure part of the wound electrode group 3 into two. One of the foil lamination parts is a joined side lamination part, which is in the central side in the thickness direction of the battery case, and in the side where two wound electrode groups 3 approach each other in the thickness direction. The other foil lamination part is a non-joined side lamination part which is in the outer side in the thickness direction of the battery case, and in the side where two wound electrode groups 3 are being away from each other in the thickness direction. On the contrary, in the present embodiment, the joined side lamination part and the non-joined side lamination part are replaced from the first embodiment. That is, the non-joined side lamination part is in the central side of the thickness direction of the battery case, and in the side where two wound electrode groups 3 approach each other in the thickness direction. The joined side lamination part is in the outer side in the thickness direction of the battery case, and in the side where two wound electrode groups 3 are being away from each other in the thickness direction.

Similarly to the first embodiment, the foil lamination part of the anode foil exposure part 34b of the wound electrode group 3 is split into two. One of them is the joined side lamination part 34b-1 to which a joint part 233 of an anode current collector board 221 is joined in the thickness direction of the wound electrode group 3 from the separators 33, 35 of the winding start. The other is the non-joined side lamination part 34b-2 to which the joint part 233 of the anode current collector board 221 is not joined. Similarly, the foil lamination part of the cathode foil exposure part 32b is split into two. One of them is the joined side lamination part 32b-1 to which a joint part 233 of a cathode current collector board 231 is joined, and the other is the non-joined side lamination parts 32b-2 to which the joint part 233 of the cathode current collector board 231 is not joined. As illustrated in FIG. 2, regarding the anode foil exposure part 34b, non-joined side lamination parts 34b-2 face each other, and joined side lamination parts 34b-1 are being away from each other. Regarding the cathode foil exposure part 32b, non-joined side lamination parts 32b-2 face each other, and joined side lamination parts 32b-1 are being away from each other. Two wound electrode groups 3 are thereby arranged facing each other.

As illustrated in FIG. 11, the anode current collector board 220 includes: a bearing surface part 221 arranged in parallel with the battery lid 6; a joint part 223 parallel to the long side surface 1b of the battery case; and a connecting part 222 for connecting the bearing surface part 221 and the joint part 223.

As joint parts 223, the anode current collector board 220 includes: one joint part 223 arranged in a position outside the joined side lamination part 34b-1 of one wound electrode group 3 in the thickness direction, and is joined to the joined side lamination part 34b-1; and the other joint part 223 arranged in a position outside the joined side lamination part 34b-1 of the other wound electrode group 3 in the thickness direction, and is joined to the joined side lamination part 34b-1.

Similarly, the cathode current collector board 230 will be discussed with reference to the FIG. 11 since the configuration is similar to that of the anode current collector board 220. The cathode current collector board 230 includes: a bearing surface part 231 that is arranged in parallel with the battery lid 6; a joint part 233 parallel to the long side surface 1b of the battery case 1; and a connecting part 232 for connecting the bearing surface part 231 and the joint part 233.

As joint parts 233, the cathode current collector board 230 includes: one joint part 233 arranged in a position outside the joined side lamination part 34b-1 of one wound electrode group 3 in the thickness direction, and is joined to the joined side lamination part 34b-1; and the other joint part 233 arranged in a position outside the joined side lamination part 34b-1 of the other wound electrode group 3 in the thickness direction, and is joined to the joined side lamination part 34b-1.

As illustrated in FIG. 10, the joint part 223 of the anode current collector board 221 is arranged so as to be in the predetermined position of the joined side lamination part 34b-1 of the anode foil exposure part 34b of the wound electrode group 3 from the battery lid 6 side. In other words, a pair of the joint parts 223, 223 of the anode current collector board 221 is arranged in the position outside the joined side lamination parts 34b-1 in the thickness direction, being away from each other, and so as to contact the surface of the joined side lamination part 34b-1. The joint parts 223, 223 of the anode current collector board 220 are joined to the joined side lamination parts 34b-1, 34b-1 of the anode foil exposure part 34, included in two wound electrode groups 3, using an ultrasonic welding method, for example. Similarly, the joint parts 233, 233 of the cathode current collector board 230 are joined to the joined side lamination parts 32b-1, 32b-1 of the cathode foil exposure part 32, included in two wound electrode groups 3, using an ultrasonic welding method, for example.

Similarly to the first embodiment, the ribbon 300 can be arranged on a metallic foil surface opposite to a surface where the joint part 223 of the anode current collector board 221 is joined to the anode foil exposure part 34b. The ribbon can be arranged on a metallic foil surface opposite to a surface where the joint part 233 of the cathode current collector board 231 is joined to the cathode foil exposure part 32b.

In the anode foil exposure part 34b, the non-joined side lamination part 34b-2 can be bundled similarly to the first embodiment. Instead of bundling each of the non-joined side lamination parts 34b-2, 34b-2 of the foil exposure parts of two wound electrode groups 3 independently, two non-joined side lamination parts 34b-2, 34b-2 facing each other can be bundled into one. Similarly to the anode foil exposure part 34b, in the cathode foil exposure part 32b, the non-joined side lamination part 32b-2 can be bundled, or two lamination parts 32b-2, 32b-2 facing each other can be bundled into one.

Thus, two non-joined side lamination parts 34b-2, 34b-2 of the anode foil exposure part 34b facing each other are bundled into one, and two non-joined side lamination parts 32b-2, 32b-2 of the cathode foil exposure part 32b are bundled into one. As a result, two wound electrode groups 3 are integrated in the non-joined side. This affords an advantage that strength against external power such as vibration is increased.

Further, according to the present embodiment, the rectangular secondary battery 100 can be downsized because connecting parts 222, 232 of the anode current collector board 220 and the cathode current collector board 230 are not projected toward the winding axis direction from the wound electrode group 3 unlike the flat parts 202, 212 of the anode current collector board 200 and the cathode current collector board 210 of the first embodiment.

### Third Embodiment

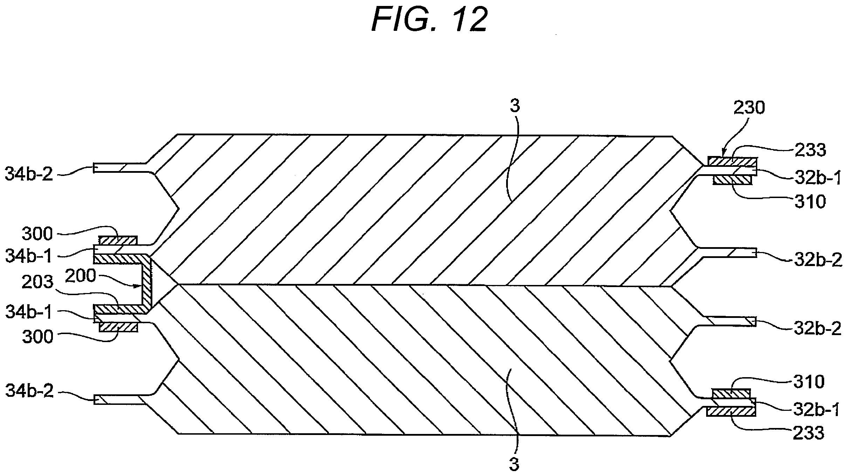

The third embodiment of the present invention will be discussed with reference to FIG. 12.

FIG. 12 is a diagram illustrating the arrangement relation of a wound electrode group and a current collector board according to the third embodiment.

In the present embodiment, the anode current collector board 200 is arranged with the joint part 203 between two wound electrode groups 3, similarly to the first embodiment. The cathode current collector board 230 is arranged with the joint part 233 outside two wound electrode groups 3, similarly to the second embodiment. In other words, two wound electrode groups 3 includes: joined side lamination parts 34b-1 of the anode foil exposure part 34b in positions approaching each other in the thickness direction; and joined side lamination parts 32b-1 of the cathode foil exposure part 32b in positions away from each other in the thickness direction.

Therefore, the current collector boards of both anode and cathode electrodes do not have to be in the same side, and different current collector boards can be used for the anode and cathode electrodes. In the present embodiment, the anode current collector board 200 of the first embodiment is used for the anode electrode, and the cathode current collector board 230 of the second embodiment is used for the cathode electrode. However, the current collector boards for the anode and cathode electrodes can be reversed. The anode current collector board 220 of the second embodiment can be used for the anode electrode, and the cathode current collector board 210 of the first embodiment can be used for the cathode electrode.

### Fourth Embodiment

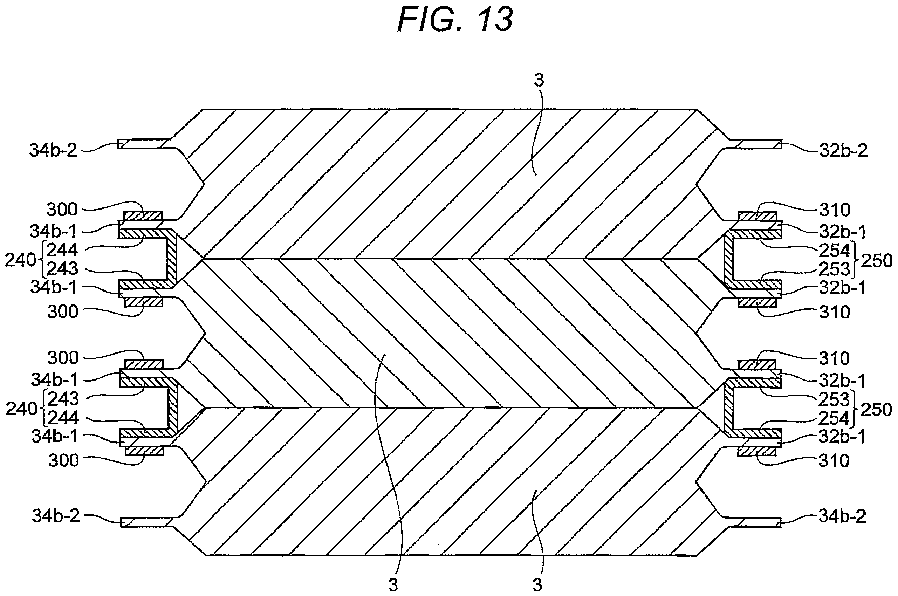

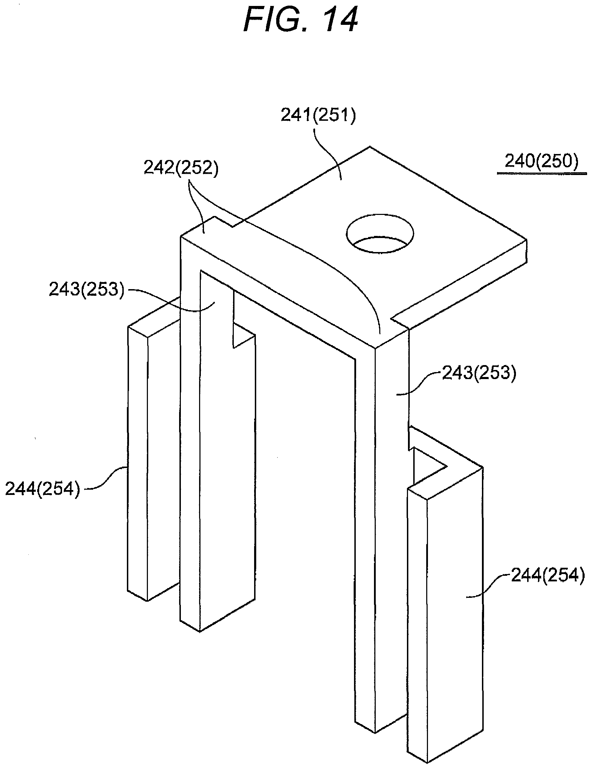

The fourth embodiment of the present invention will be discussed with reference to FIG. 13 and FIG. 14.

FIG. 13 is a diagram illustrating a wound electrode group and a current collector board in the A-A section of FIG. 1 according to the fourth embodiment. FIG. 14 is a perspective diagram for illustrating a configuration of the anode current collector board.

In the first through third embodiments, the number of the wound electrode groups 3 accommodated in one battery container 1 is two. However, in the present embodiment, the number of the wound electrode groups 3 accommodated in one battery container 1 is three.

Three wound electrode groups 3 are arranged such that the neighboring flat surfaces of the wound electrode groups 3 face each other, and that anode electrodes are arranged nearby, and cathode electrodes are arranged nearby. Similarly to the first embodiment, the joint parts 243, 244 of the anode current collector board 240 are arranged between the joined side lamination parts 34b-1 that are included in the wound electrode groups 3 neighboring each other. The joint parts 253, 254 of the cathode current collector board 251 are arranged between the joined side lamination parts 32b-1 that are included in the wound electrode groups 3 neighboring each other.

Among three wound electrode groups 3, the central wound electrode group 3 includes: a pair of joined side lamination parts 34b-1, 34b-1 made of splitting the foil lamination part of the anode foil exposure part 34b into two; and a pair of joined side lamination parts 32b-1, 32b-1 made of splitting the foil lamination part of the cathode foil exposure part 32b into two. However, each of the foil lamination parts does not have a non-joined side lamination part. In other words, in the central wound electrode group 3, the foil lamination part of the anode foil exposure part 34b is split into two from the central position of the wound electrode group 3 in the thickness direction to the away direction in the thickness direction, similarly to the wound electrode groups 3 in both sides. Both of these two foil lamination parts are the joined side lamination parts 34b-1, and the non-joined side lamination parts 34b-2 are not included. Similarly, the foil lamination part of the cathode foil exposure part 32b is split into two from the central position of the wound electrode group 3 in the thickness direction to the away direction in the thickness direction. Both of these two foil lamination parts are the joined side lamination parts 32b-1, and the non-joined side lamination parts 32b-2 are not included.

On the other hand, among three wound electrode groups 3, the wound electrode groups 3 in both sides include: a joined side lamination part 34b-1 and a non-joined side lamination part 34b-2 in the anode foil exposure part 34b; and a joined side lamination part 32b-1 and a non-joined side lamination part 32b-2 in the cathode foil exposure part 32b. The joined side lamination part 34b-1 is arranged in a side approaching the central wound electrode group 3. The non-joined side lamination part 34b-2 is arranged in a side away from the central wound electrode group 3.

The geometry of the anode current collector board 240 will be discussed with reference to FIG. 14. The anode current collector board 240 includes: a terminal connecting part 241 arranged in parallel with the battery lid 6; a flat part 243 arranged in the winding center axis direction; a connecting part 242 connecting the terminal connecting part 241 and the flat part 243 ; and a joint part 244 connected to the flat part 243 and bent in U-shape. The joint part 244 is joined to the joined side lamination part 34b-1 of the anode foil exposure part 34b of the wound electrode group. These two joint parts 244, which are U-shaped, are inserted between the joined side lamination parts 34b-1 of the anode foil exposure part 34b of two wound electrode groups 3 that are neighboring each other. This U-shaped joint part 244 is joined to the joined side lamination part 34b-1 of the anode foil exposure part 34b of the wound electrode group 3 using an ultrasonic welding method, for example.

The configuration of the cathode current collector board 250 and the cathode foil exposure part 32b of the wound electrode group 3 is the same with that of the anode current collector board 240 and the anode foil exposure part 34b of the wound electrode group 3. The U-shaped joint part 254 of the cathode current collector board 250 and the joined side lamination part 32b-1 of the cathode foil exposure part 32b can be joined using an ultrasonic welding method, for example.

According to the present embodiment, in two wound electrodes groups 3 in both sides among three wound electrode groups 3, one of the two foil lamination parts in the anode foil exposure part 34b is the joined side lamination part 34b-1, and the other is the non-joined side lamination part 34b-2. Similarly, one of the two foil lamination parts in the cathode foil exposure part 32b is the joined side lamination part 32b-1, and the other is the non-joined side lamination part 32b-2. Therefore, the non-joined side lamination parts 34b-2, 32b-2 do not have to be connected with the anode current collector board 240 and the cathode current collector board 250. This can downsize the anode current collector board 240 and the cathode current collector board 250, and can lightweight the entire secondary battery.

Further, according to the present embodiment, in the anode current collector board 220 and the cathode current collector board 230, the connecting parts 243, 253 are arranged between the wound electrode group 3 in the center and the neighboring wound electrode groups 3 in the both sides. The current collector boards 220, 230 are not projected toward the winding axis direction from the wound electrode group 3 unlike the flat parts 202, 212 of the anode current collector board 200 and the cathode current collector board 210 in the first embodiment. Therefore, the rectangular secondary battery 100 can be downsized.

### Fifth Embodiment

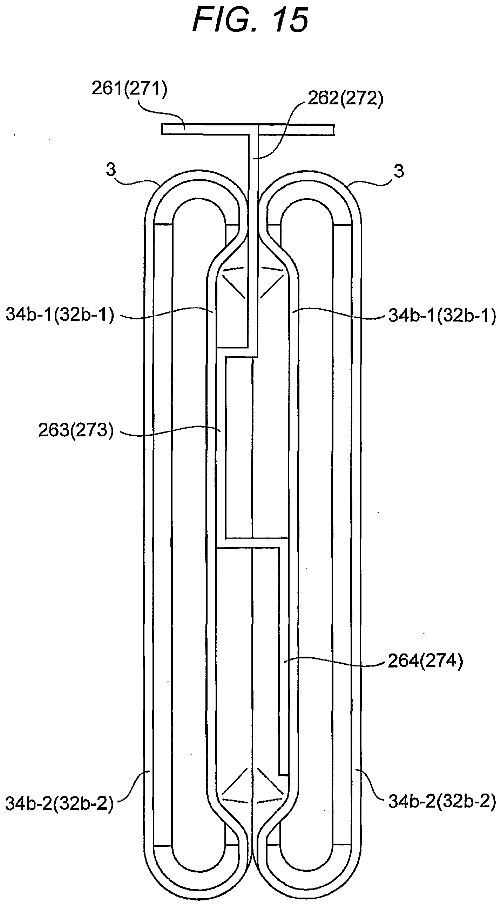

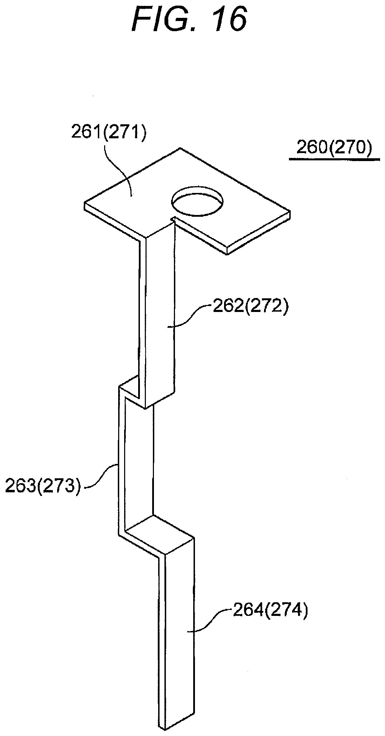

The fifth embodiment will be discussed with reference to FIG. 15 and FIG. 16. FIG. 15 is a diagram illustrating a relation of two wound electrode groups and an anode current collector board which is arranged between two wound electrode groups. FIG. 16 is a perspective diagram of the anode current collector board. In the present embodiment, the current collector board which is arranged between two wound electrode groups 3 has a step-like configuration as illustrated in FIG. 16. An anode current collector board 260 includes: a terminal connecting part 261 arranged in parallel with the battery lid 6; a flat part 262 extending from the terminal connecting part 261 toward the case bottom 1d of the battery case 1; and two joint parts 263, 264 that are joined to the anode foil exposure part. After the joined side lamination part 34b-1 of the anode foil exposure part 34b of one wound electrode group 3 is joined with the joint part 263 using an ultrasonic welding method, for example, the joined side lamination part 34b-1 of the anode foil exposure part 34b of the other wound electrode group 3 is joined with the joint part 264. To achieve this, two joint parts 263, 264 form a step-like geometry.

Similarly, the configuration of a cathode current collector board 270 will be discussed with reference to FIG. 16 since the configuration is similar to that of the anode current collector board 260. The cathode current collector board 270 includes: a terminal connecting part 271 arranged in parallel with the battery lid 6; a flat part 272 extending from the terminal connecting part 271 toward the case bottom 1d of the battery case 1; and two joint parts 273, 274 joined to the foil exposure part. After the joined side lamination part 32b-1 of the cathode foil exposure part of one wound electrode group 3 is joined with the joint part 273 using an ultrasonic welding method, for example, the joined side lamination part 34b-1 of the cathode foil exposure part of the other wound electrode group 3 is joined with the joint part 274. To achieve this, two joint parts 273, 274 form a step-like geometry.

According to the present embodiment, the anode current collector board 260 and the cathode current collector board 270 can be produced easily from a single board respectively, using press molding.

### Sixth Embodiment

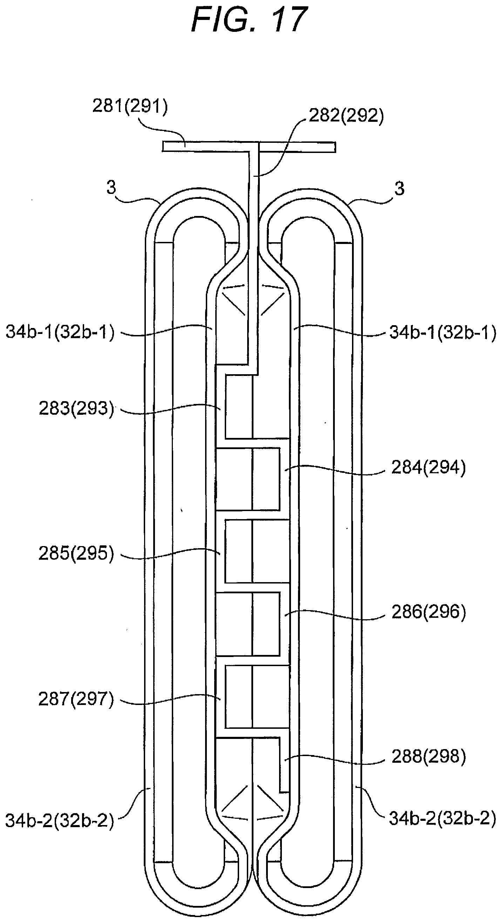

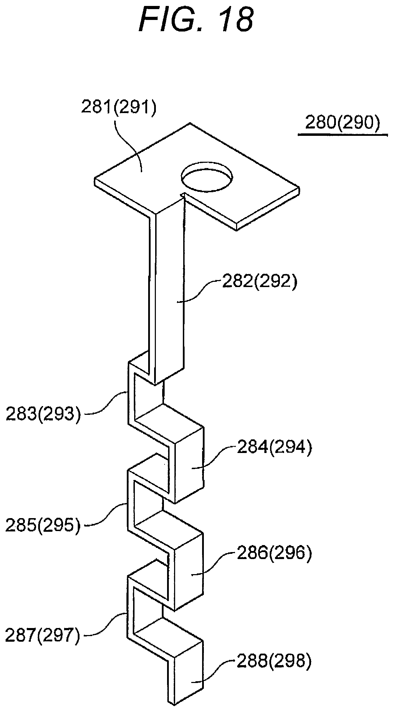

The sixth embodiment of the present invention will be discussed with reference to FIG. 17 and FIG. 18.

FIG. 17 is a diagram illustrating a relation of two wound electrode groups and an anode current collector board which is arranged between two wound electrode groups. FIG. 18 is a perspective diagram of the anode current collector board.

In the fifth embodiment mentioned above, one wound electrode group is joined to only one surface of a step-like current collector board. In this embodiment, one wound electrode group is joined to multiple surfaces of the step-like current collector board.

An anode current collector board 280 includes : a terminal connecting part 281 arranged in parallel with the battery lid 6; a flat part 282 extending from the terminal connecting part 281 toward the case bottom 1d of the battery case 1; and multiple joint parts 283 through 288 that are joined to the joined side lamination part 34b-1 of the anode foil exposure part.

The joint parts 283, 285, 287 of the anode current collector board 280, which are joined to the joined side lamination part 34b-1 of the anode foil exposure part 34b of one wound electrode group 3, are arranged with intervals in the height direction of the wound electrode group 3. Similarly, the joint parts 284, 286, 288 of the anode current collector board 280, which are joined to the joined side lamination part 34b-1 of the anode foil exposure part 34b of the other wound electrode group 3, are arranged with intervals in the height direction of the wound electrode group 3.

Then, the joint parts 284, 286, 288 of the anode current collector board 280 are arranged so as to face and contact the joined side lamination part 34b-1 of the anode foil exposure part 34b of one wound electrode group 3. Simultaneously, the joint parts 283, 285, 287 of the anode current collector board 280 are arranged so as to face and contact the joined side lamination part 34b-1 of the anode foil exposure part 34b of the other wound electrode group 3. Then the contacted surfaces are joined using an ultrasonic welding method, for example.

Similarly, the cathode current collector board will be discussed with reference to FIG. 18, since the configuration is similar to that of the anode current collector board. The cathode current collector board 290 includes: a terminal connecting part 291 arranged in parallel with the battery lid 6; a flat part 292 extending from the terminal connecting part 291 toward the case bottom 1d of the battery case 1; and multiple joint parts 293 through 298 that are joined to the joined side lamination part 32b-1 of the cathode foil exposure part.

The joint parts 293, 295, 297 of the cathode current collector board 290, which are joined to the joined side lamination part 32b-1 of the cathode foil exposure part 32b of one wound electrode group 3, are arranged with intervals in the height direction of the wound electrode group 3. Similarly, the joint parts 294, 296, 298 of the cathode current collector board 290, which are joined to the joined side joint part 32b-1 of the cathode foil exposure part 32b of the other wound electrode group 3, are arranged with intervals in the height direction of the wound electrode group 3. Similarly, the joint parts 294, 296, 298 of the cathode current collector board 290, which are joined to the joined side lamination part 32b-1 of the cathode foil exposure part 32b of the other wound electrode group 3, are arranged with intervals in the height direction of the wound electrode group 3.

Then, the joint parts 294, 296, 298 of the cathode current collector board 290 are arranged so as to face and contact the joined side lamination part 32b-1 of the cathode foil exposure part 32b of one wound electrode group 3. Simultaneously, the joint parts 293, 295, 297 of the cathode current collector board 290 are arranged so as to face and contact the joined side lamination part 32b-1 of the cathode foil exposure part 32b of the other wound electrode group 3. Then the contacted surfaces are joined using an ultrasonic welding method, for example.

As discussed above, the multiple joint parts 283 through 288 (293 through 298) of the anode (cathode) current collector board 280 (290) are arranged with intervals in the joined side of the foil exposure part of one wound electrode group 3. This allows reducing deformation of the wound electrode group 3 when an external force such as vibration is received.

In the present embodiment, the number of positions is three, where the joint parts of the anode (cathode) current collector board are joined to the joined side lamination part of the anode (cathode) foil exposure part of the one wound electrode group 3. However, the number of the connecting locations does not have to be limited to three and can be two, four or more.

The embodiments of the present invention are detailed above. The scope of the present invention shall not be limited to the embodiments discussed above, and can be modified variously, as long as it does not deviate from the spirit of the present invention described in the claims. For instance, the above mentioned embodiments are detailed for clearly explaining the present invention and this does not mean that the present invention is limited to those including every configuration discussed above. A part of configuration of one embodiment can be replaced with a configuration of the other embodiment. A configuration of one embodiment can be added to configuration of the other embodiment. A portion of configurations of each embodiment can be added, deleted, or replaced with the other configurations.

### Reference Signs List

- 1: battery case
- 1b: broader side surface
- 1c: narrower side surface
- 1d: bottom surface of battery case
- 3: wound electrode group
- 6: battery lid
- 12: cathode external terminal
- 14: anode external terminal
- 32: cathode electrode
- 32b: cathode foil exposure part
- 32b-1: joined side lamination part
- 32b-2: non-joined side lamination part
- 34: anode electrode
- 34b: anode foil exposure part
- 34b-1: joined side lamination part
- 34b-2: non-joined side lamination part
- 33, 35: separator
- 36: bent part
- 200, 220, 240, 260, 280: anode current collector board
- 210, 230, 250, 270, 290: cathode current collector board
- 400: sticky tape

## Claims

1. A rectangular secondary battery comprising:
a flat wound electrode group having a foil lamination part where a foil exposure part is laminated on end parts of winding axis direction;
a battery case accommodating therein a plurality of the wound electrode groups in piles in parallel in a thickness direction;
a current collector board joined to the foil lamination part inside the battery case; and
an external terminal connected to the current collector board and is exposed outside the battery case, wherein
at least two of the wound electrode groups have a joined side lamination part and a non-joined side lamination part made by splitting the foil lamination part into two in the thickness direction, and
the joined side lamination parts are being bundled and are joined to the current collector board.

2. The rectangular secondary battery according to claim 1, wherein
among the plurality of the wound electrode groups, a pair of the wound electrode groups arranged in the both sides of the thickness direction includes the joined side lamination part and the non-joined side lamination part.

3. The rectangular secondary battery according to claim 2, wherein
the wound electrode groups are accommodated inside the battery case in unit of two.

4. The rectangular secondary battery according to claim 3, wherein
in the two wound electrode groups, their respective joined side lamination parts are arranged in positions approaching each other in the thickness direction, and
the current collector board is arranged between the joined side lamination parts of the two wound electrode groups, and includes a joint part which is joined to each of the joined side lamination parts.

5. The rectangular secondary battery according to claim 3, wherein
in the two wound electrode groups, their respective joined side lamination parts are arranged in positions away from each other in the thickness direction, and
the current collector board includes: one joint part arranged in a position outside the joined side lamination part of one wound electrode group in the thickness direction, and joined to the joined side lamination part; and the other joint part arranged outside the joined side lamination part of the other wound electrode group in the thickness direction, and joined to the joined side lamination part.

6. The rectangular secondary battery according to claim 2, wherein
the wound electrode groups are accommodated inside the battery case in unit of three.

7. The rectangular secondary battery according to claim 6, wherein
among the three wound electrode groups;
the central wound electrode group includes a pair of joined side lamination parts made by splitting the foil lamination part into two in the thickness direction and,
the both side wound electrode groups include: the joined side lamination part arranged in a side approaching the central wound electrode group; and the non-joined side lamination part arranged in a side away from the central wound electrode group, and wherein
the current collector board includes a joint part which is arranged between the joined side lamination part of the central wound electrode group and the joined side lamination part of the both sides wound electrode groups, the joint part being joined to each joined side lamination part.

8. The rectangular secondary battery according to claim 2, wherein
the wound electrode group has separators in the outermost layers, and
two wound electrode groups neighboring each other are arranged such that the winding directions are the same, each of the winding end parts of the separators is arranged on each of the flat surfaces facing each other, and the winding end parts of the separators are arranged separately with a predetermined interval.

9. The rectangular secondary battery according to claim 2, wherein
the non-joined side lamination parts are being bundled.
